# EUROPEAN PATENT APPLICATION

(11) **EP 1 635 536 A2**
(43) Date of publication of application: **15.03.2006**
(21) Application number: 05255591.9
(22) Date of filing: 13.09.2005
(51) Int. Cl.: H04L 29/06

(54) **Authentication with expiring binding digital certificates**

(30) Priority: 14.09.2004 US 940042
(71) Applicant: Stanley, Morgan, New York, NY 10036 (US)
(72) Inventor: Sherman, Andrew, New York, NY 10025 (US); Donnelly, Barbara, Hillsborough, NJ 08844 (US); Duchovni, Victor, New York, NY 10024 (US)
(74) Representative: Finnie, Peter John

(57) **Abstract**

In various embodiments of the present invention systems and methods for authenticating a client for access to a business service of a firm and methods of creating a binding between a client's public key and a client identifier are provided. In one embodiment, the present invention is directed to a system for authenticating a client for access to a business service of a firm. The system may include a computer-implemented system. The computer-implemented system may be configured to verify the identity of the client and thereafter create a binding between a digital certificate and the client, wherein the binding is configured to expire after a period of time. The computer-implemented system may also be configured to verify the validity of the digital certificate and the binding.

## Description

### BACKGROUND

Many firms offer their clients access to business services from a variety of remote locations. A financial services firm, for example, may offer its clients remote access to trade securities and/or manage investment portfolios through the firm. Clients may be given remote access to services through a public network such as the Internet. When services are provided remotely through a public network, however, security becomes an important concern. For example, the firm may have systems and processes that ensure that client requests are authentic and that communications between the firm and its clients are not intercepted.

Many firms implement encryption systems to promote secure communications with their clients. In a public key encryption system, for example, each party to a communication (e.g., the firm and its client) has a pair of unique encryption keys, a public key and a private key. Messages are encrypted by a recipient's public key and decrypted by the recipient's private key. The sender uses the recipient's public key, which is provided to the sender by the recipient, to encrypt messages. The recipient can then employ its private key to decrypt the encrypted messages. Because the messages may only be decrypted by the recipient's private key, and because the private key is not shared between the parties, it is difficult for a third party to decrypt and read the messages.

It can be appreciated that firms offering remote access to clients need to verify that purported client requests do, in fact, originate from legitimate clients of the firm. Without a security system to provide authentication, however, a firm may not be able to verify that a party making a client request is actually a client of the firm. One such security system authenticates clients using a security token. Firm clients may be issued security tokens that generate periodically changing passwords. The firm can verify the authenticity of a client request for remote access by requiring the client to enter the security token's current password. If the password entered by the client matches the token's current password, which the firm knows from the algorithm that generated the password, then the firm may be assured that the client request was made by someone in possession of the security token who is likely to be the client.

Authentication by security token, however, has several disadvantages. Many clients consider tokens or other similar security devices cumbersome and inconvenient. For example, security token authentication often requires the client to transpose a complicated password from the security token to a computer. If the client repeatedly miscopies the password from the token, the client's account may be locked causing further inconvenience. Also, if the token is lost, the client may be unable to access services of the firm until the token is found or a new token is acquired.

In view of the foregoing problems with conventional security systems and methods, it would be desirable to authenticate remote access clients with enhanced convenience while maintaining an acceptable level of security.

### SUMMARY

In various embodiments of the present invention, systems and methods for authenticating a client for access to a business service of a firm and methods of creating a binding between a client's public key and a client identifier are provided.

In one embodiment, the present invention is directed to a system for authenticating a client for access to a business service of a firm. The system may include a computer-implemented system. The computer-implemented system may be configured to verify the identity of the client and thereafter create a binding between a digital certificate and the client. The binding may be configured to expire after a period of time. The computer-implemented system may also be configured to verify the validity of the digital certificate and the binding.

In another embodiment, the present invention is directed to a method of authenticating a client for access to a business service of a firm. The method may include verifying the identity of the client and creating a first binding between a digital certificate and the client. The binding may include a representation of the digital certificate associated with a representation of the client. Also, the first binding may expire after a period of time. The digital certificate may be stored at a first location. The method may also include checking the validity of the digital certificate, and checking whether the digital certificate is validly bound to the client.

In yet another embodiment, the present invention is directed to a method of creating a binding between a client's public key and a client identifier. The method may include verifying the identity of the client with a token, associatively storing a representation of the public key, a representation of the client, and a representation of an expiration date for the binding, and permitting the client to access a client service system upon verification of the client's binding without requiring use of the client token for the verification.

Computer readable medium embodiments are also provided. Other embodiments of the present invention will become apparent to those skilled in the art upon review of the following description and figures. It is intended that all such additional embodiments are within the scope of the present invention and are protected by the claims.

### BRIEF DESCRIPTION OF THE FIGURES

Figure 1 includes a schematic representation illustrating various features of a network for authenticating clients in accordance with various aspects of the present invention;
Figure 1A includes a schematic representation illustrating various features of a network for authenticating clients in accordance with various aspects of the present invention;
Figure 2 includes a process flow diagram provided in accordance with various aspects of the present invention;
Figure 2A includes a process flow diagram showing aspects of the flow diagram of Figure 2 in accordance with various aspects of the present invention;
Figure 3 includes a process flow diagram provided in accordance with various aspects of the present invention;
Figure 4 includes a process flow diagram provided in accordance with various aspects of the present invention;
Figures 5A - 5E include sample User Interface (UI) screen displays provided in accordance with various aspects of the present invention; and
Figures 6A - 6E include sample screen displays of communications that may be transmitted in accordance with various aspects of the present invention.

### DESCRIPTION

As applied herein to various embodiments, "business services" may include any service or services provided to a client over a communication system including, for example and without limitation, securities trading, investment portfolio management, retail and wholesale sales, sales account management, service(s) provided between entities in a supply chain, and/or any other service(s) suitable for use in accordance with the present invention.

As applied herein to various embodiments, a "client" may include, for example and without limitation, any entity whose identity may be verified in the process of seeking access to business services through a network or system. Examples of "clients" include, for example and without limitation, financial services clients, retail clients, wholesale clients, and suppliers of a manufacturer.

As applied herein to various embodiments, a "firm" may include any entity that offers business services to clients. Examples of "firms" include, for example and without limitation, financial services firms, banks, brokerages, retail businesses, wholesalers, manufacturers and distributors.

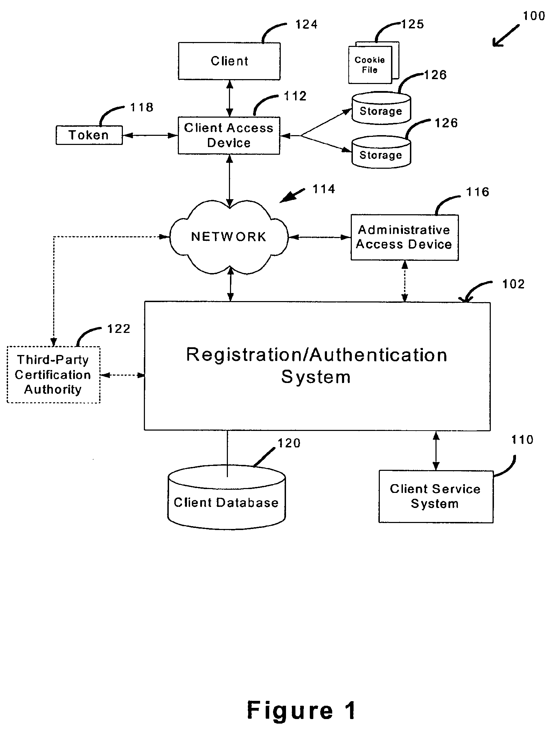

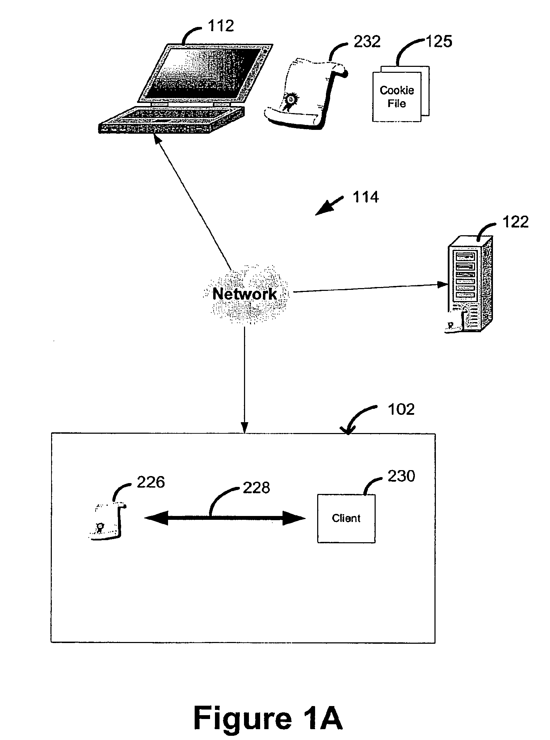

Figure 1 shows a diagram of a system architecture 100 including a registration/authentication system 102 configured to register and authenticate clients 124 seeking to access one or more business services provided on a client service system 110. A client 124 may access the registration/authentication system 102 and ultimately the client service system 110 through one or more access devices 112 via communication with a network 114. In various embodiments, the client may seek access remotely or locally with respect to the firm. The access devices 112 may be any type of devices capable of communicating with the registration/authentication system 102 via the network 114 including, for example and without limitation, computer devices (such as PC's, laptops, PDA's, pocket PC's, etc.) having browser software (e.g., Microsoft Internet Explorer) and/or various input/output devices. The access devices 112 may have one or more operatively associated storage devices 126 which may include, for example, a random access memory (RAM), a read-only memory (ROM), a magnetic medium such as a hard drive or a floppy disk, and/or an optical medium, such as a CD-ROM. The network 114 may be any type of data communications network such as the Internet and/or an intranet of the firm, for example.

In various embodiments, a representative of the firm or business implementing the registration/authentication system 102 (e.g., an administrative user) may access the registration/authentication system 102 through one or more administrative access devices 116. The administrative access devices 116 may be configured to access the registration/authentication system 102 via the network 114, or by another suitable communication path (e.g., an intranet connection). Examples of suitable administrative access devices 116 may include, for example, personal computers running browser applications and having various input/output devices (e.g., keyboard, mouse, touch screen, etc.) for processing user data.

The registration/authentication system 102 may be implemented as one or more centrally and/or remotely located, networked computer devices (e.g., servers) programmed for execution of the functionality described below. The registration/authentication system 102 may be implemented as software code executed by a processor (not shown), and/or by one or more elements of the system architecture 100, using any suitable computer language (e.g., Java, C, C++, Perl) in connection with any suitable programming methodology (e.g., object-oriented programming methodology). In various embodiments, the software code may be stored as a set of instructions on a computer-readable medium or media such as, for example, a random access memory (RAM), a read-only memory (ROM), a magnetic medium such as a hard drive or a floppy disk, and/or an optical medium, such as a CD-ROM.

The client service system 110 may be any kind of device or system configured for providing business services to the client 124 such as the client of a financial services firm, for example. The business services provided by the firm may include any kind of services for which it is desirable or necessary to authenticate the identity of clients seeking to access the services. For example, in the context of a financial services firm, the client service system 110 may allow the client to trade securities and/or manage an investment portfolio. As described below in more detail, the client service system 110 may utilize an operative association with the registration/ authorization system 102 to authenticate clients for remote access to services provided through the client service system 110.

In various embodiments, the system architecture 100 may include one or more data storage media such as a client database 120, for example. The client database 120 may contain data entries corresponding to individual clients of a firm. The data entries may contain client-related information that may be modified by an administrative user, for example, through an administrative access device 116. Information for each client may include (1) client identification data (e.g., client name, contact information, client user name, unique identifier) and other data which may be derived from a customer relationship management system, (2) data representative of a client password (e.g., a complex password or a hash of a password), (3) data representative of a client public key (e.g., data representative of a client digital certificate (which includes a client public key) or a hash of the public key or a hash of the digital certificate), (4) data representative of an expiration date, relating to the binding of client identification data to data representative of a client public key (e.g., representative of a digital certificate), and (5) access records. If the client has a security token, database entries for the client may contain a representation of the security token's algorithm for generating passwords. An example of a security token is RSA's SecurID®. Each client's database entry may also denote the client's level of access to the various services or features provided by the client services system 110 (e.g., client authorization/entitlement data).

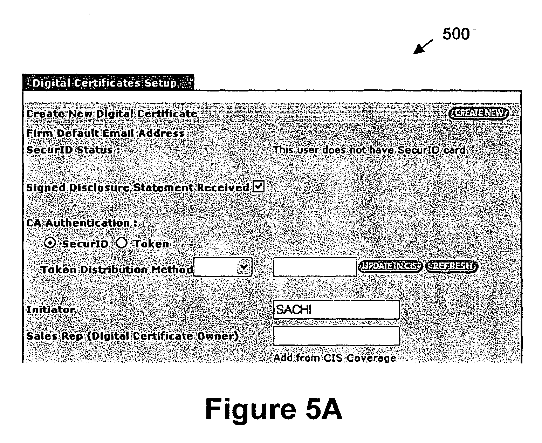

According to various embodiments, the registration/authentication system 102 may present a user of the registration/authentication system 102 with one or more user interface screens (Uls). Examples of UI screen displays that may be presented to users of the system architecture 100 according to various aspects of the present invention are illustrated in Figs. 5A-5E. In general, UI screens may be presented through an interactive computer to solicit information from and present information to a user in conjunction with authentication of the user for remote access to services offered through the client service system 110. The Uls may be presented through the client access devices 112 and/or the administrative access devices 116.

Figure 1A schematically depicts various aspects of a digital certificate implementation provided in accordance with the present invention. Once the client's identity has been verified (e.g., such as through the use of a security token, which may be, for example, a physical token such as SecurID or a password), a digital certificate 232 may be issued to the client 124 by the registration/authentication system 102 of the registration/authentication system 102 or, alternatively in other embodiments, by a third party certification authority 122. The digital certificate 232 may be stored in a storage medium such as a storage device 126 operatively associated with the client access device 112, for example, or on a smart card (not shown) that the client 124 may use with a variety of different client access devices 112. In various embodiments, the digital certificate 232 may expire after a predetermined time after issuance of the digital certificate 232.

In various embodiments, the registration/authentication system 102 may bind the digital certificate 232 to the client 124 (the binding is shown schematically by double-headed arrow 228). The system 102 may create the binding 228 by recording data that associates a representation 226 of the digital certificate 232 with a representation 230 of the client 124. The representation 226 of the digital certificate 232 may be, for example, data indicative of the digital certificate or the client public key contained in the digital certificate. The representation 226 may be a unique random string (e.g., produced by a hash of the digital certificate or the public key). The representation 230 of the client 124 may be, for example, data indicative of the client. The representation 230 may be data representing the client's identity such a client's name, account information, and/or other client specific data. The binding 228 may be implemented by storing both representations 226 and 230 in a common location such as the client database 120, for example. Also, the binding 228 may be implemented by creating a pointer between the representations 226 and 230. In various embodiments, the binding 228 between the client 124 and the digital certificate 232 may expire after a predetermined time such as after one year, for example, or another predetermined time period. Accordingly, data representative of a binding expiration date may be stored in association with representations 226 and 230. In certain embodiments, the binding 228 between the client 124 and the digital certificate 232 may expire within a predetermined period that is less than a period during which the digital certificate 232 remains valid (i.e., the expiration period of the binding 228 may be less than the expiration period of the digital certificate 232).

After the digital certificate 232 has been issued and bound to the client 124, when the client attempts to access the business services 110, the digital certificate 232 may be presented to the registration/authentication system 102 as proof of the client's identity. Presentation of the digital certificate may involve a cryptographic exchange used to establish that the presenter is in possession of the private key corresponding to the public key contained in the digital certificate. An example of such an exchange is the standard Secure Socket Layer, or SSL handshake. The registration/authentication system 102 may further verify the client's identity by verifying the status of the binding 228 between the client 124 and the digital certificate 232. The registration/authentication system 102 may yet further verify client identity by checking a complex password or other suitable authentication factor. It can be seen that the registration/authentication module 102 may be configured, in various embodiments, to verify the identity of the client 124, issue the client 124 a digital certificate 232, and/or bind (and rebind) the digital certificate 232 to the client 124.

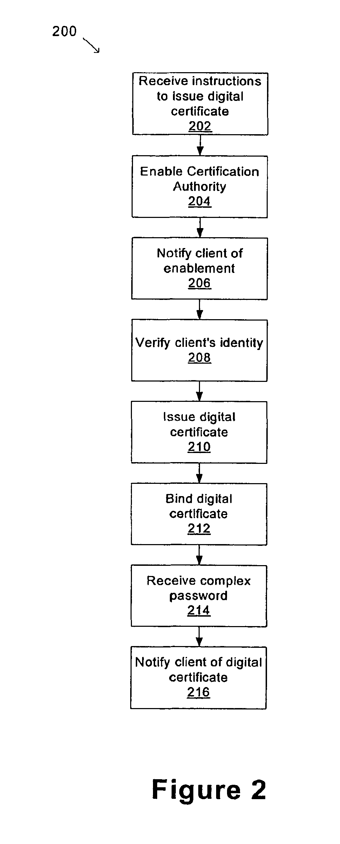

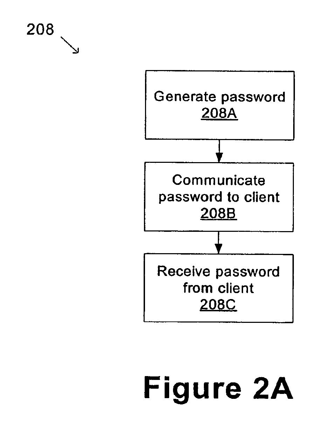

Figure 2 is a flowchart depicting various aspects of a process flow 200 conducted in association with embodiments of the present invention. The process flow 200 illustrates interactions between the client 124 and the registration/authentication system 102, for example, during a sample digital certificate issuance process.

At step 202, the registration/authentication system 102 may receive instructions to issue a digital certificate 232 to a client 124. The instructions may be received from an administrative user on behalf of the client 124, for example, or the client 124 may submit instructions directly to the registration/authentication system 102 to request the digital certificate 232. The instructions may contain details concerning how the digital certificate 232 should be issued. The administrative user may present the client 124 with terms and conditions of the digital certificate service and may request that client 124 provide a signed disclosure statement. The administrative user also may determine how the client's identity should be verified prior to issuing the digital certificate 232. After gathering any necessary information, in step 202 the administrative user may submit instructions, which are received by the registration/authentication system 102, to issue the digital certificate 232 to the client 124. Requests for issuance of digital certificates may be submitted through the administrative access device 116, for example, and may include information gathered by the administrative user.

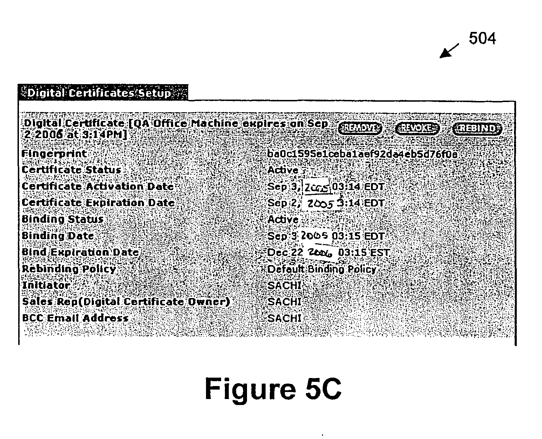

Figure 5A shows a sample screen display of a UI screen 500 that may be shown to an administrative user requesting the digital certificate 232 on behalf of the client 124. In various embodiments, the UI screen 500 may be displayed for access on the administrative access device 116. The administrative user may submit instructions to the registration/authentication system 102 through the UI screen 500. For example, the administrative user may use the UI screen 500 to submit the method by which the client's identity should be verified. Also, through use of the UI screen 500, an administrative user may verify that the terms and conditions of the digital certificate service have been disclosed to the client 124. After issuance of a digital certificate 232, an administrative user may modify the properties of the digital certificate 232, for example, using UI screen 504 shown in Fig. 5C.

In various embodiments, the registration/authentication system 102 may receive instructions directly from the client 124 without the aid of an administrative user. The client 124 may issue the instructions to the registration/authentication system 102 through the client access device 112, for example. The registration/authentication system 102 may cause the terms and conditions of the digital certificate service to be provided to the client 124 through the client access device 112 and may prompt the client 124 to accept the terms and conditions as well as select a method of verifying the client's identity. In certain embodiments, the registration/authentication system 102 may select a method of verification by default with or without first consulting the client 124.

At step 204, the registration/authentication system 102 may enable a digital certification authority to issue a digital certificate to the client 124. A digital certification authority is an entity that is established to issue digital certificates 232. In certain embodiments, the registration/authentication system 102 may include a digital certification authority to issue digital certificates 232 for clients 124. The registration/authentication system 102 may also rely on a third party digital certification authority 122 such as those offered by "Verisign" or "Thawte", for example, to issue digital certificates 232 for clients 124. Thus, in the case of a third party certification authority 122, step 204 involves notifying the third party digital certification authority 122 that a digital certificate 232 should be issued to the client 124. The registration/authentication system 102 and client access device 112 may communicate with the third party digital certification authority 122 via the network 114, for example.

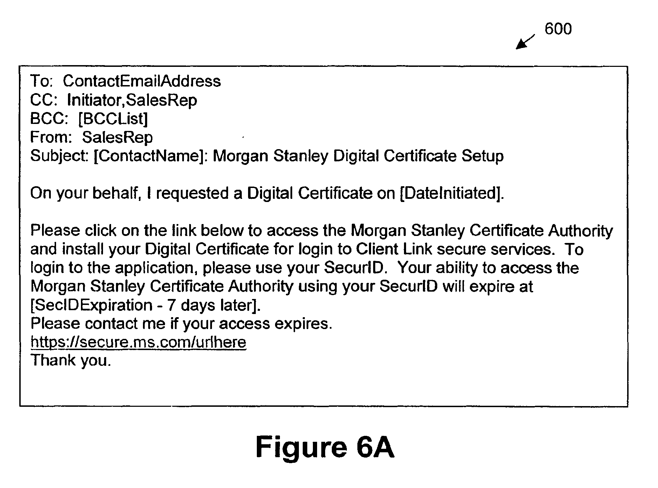

At step 206, the registration/authentication system 102 may notify the client 124 that a digital certification authority is ready to issue a certificate. As shown in Figure 6A, UI screen 600 depicts an exemplary communication sent to the client 124. It can be appreciated that communications to/from the client 124 may occur through a variety of different channels (e.g., e-mail, text messaging, pager, fax, wireless telephone, etc.). The communications may include instructions that explain how the client 124 can complete the digital certification process. For example, the client instructions may indicate the method or device by which the registration/authentication system 102 should verify the identity of the client 124.

At step 208, the registration/authentication system 102 may verify the identity of the client 124 by checking a password in the possession of the client that is, for example, derived from a physical security token 118. The token in this case may have been previously securely delivered to the client, e.g., by mail. Alternatively, identity verification may occur by checking a password (token) not derived from an electronic token device, but a password communicated to the client 124 by e-mail, telephone or fax, for example, and then asking the client 124 to verify receipt of the password.

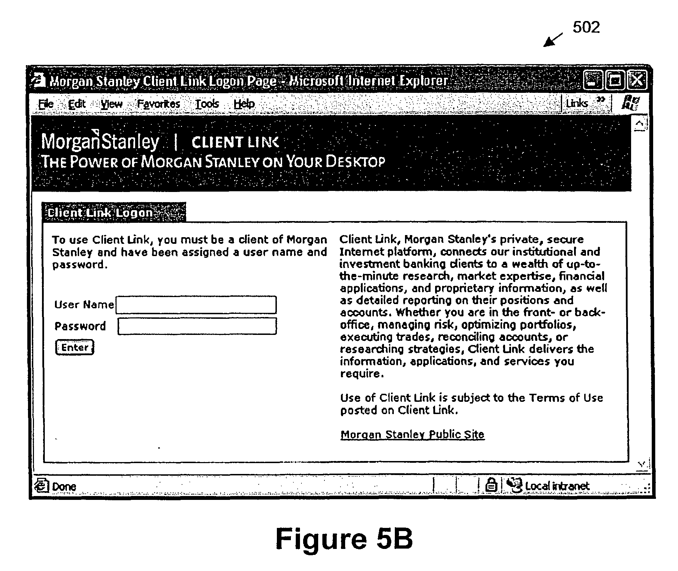

Figure 5B includes a UI screen 502 that may be presented to the client 124 seeking to access business services provided by the client service system 110 to verify the identity of the client 124. The client 124 may enter a username and a password into the UI screen 502. The password may include at least a portion that is derived from the security token 118 of the client 124. The registration/authentication system 102 may receive the password and compare it to the algorithm corresponding to the client's security token 118. In one aspect, the certification may fail to verify the client's identity if more than a predetermined amount of time (e.g., twenty-four hours) elapses from the time of the request for a digital certificate 232 and time of the verification attempt.

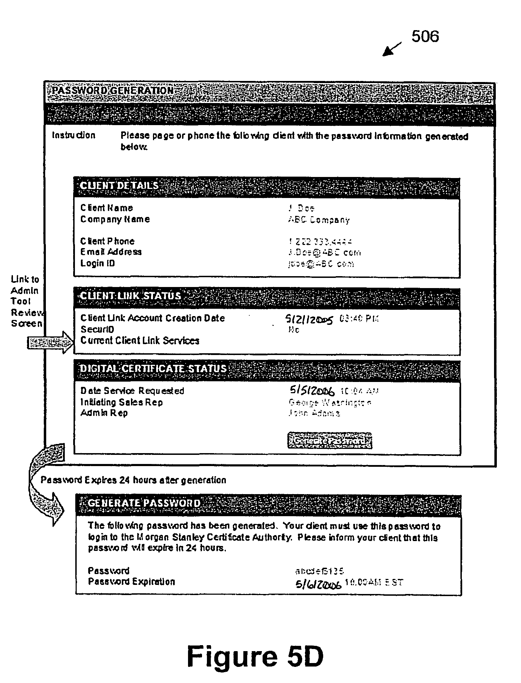

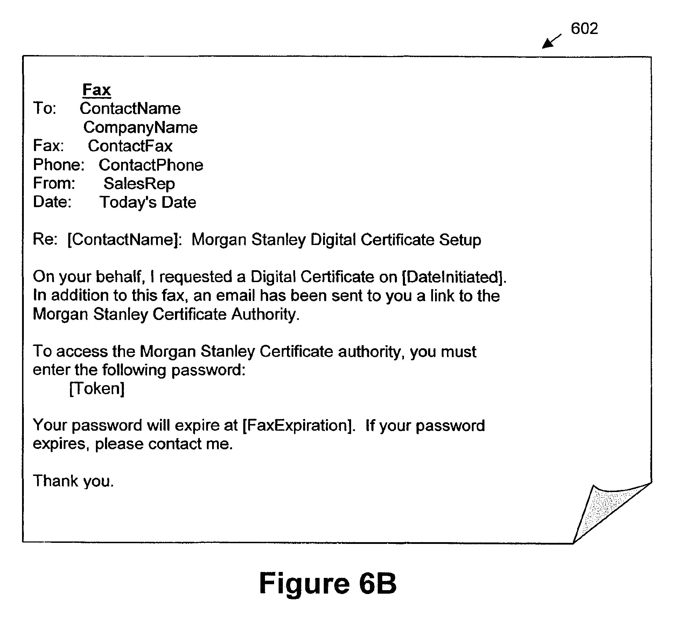

Figure 2A shows aspects of step 208 of Figure 2 as it applies to the special case where the client does not have a physical token (e.g., SecurID) but rather must have a password (e.g., a single use password (token)) delivered to them for the identification process. At step 208A, the registration/authentication system 102 may generate a password to be sent to and then received back from the client 124. The password may be generated in response to a request by an administrative user or by direct request of the client 124. For example, Figure 5D shows a UI screen 506 that can be employed by an administrative user to prompt the registration/authentication system 102 to generate a password (e.g., by selecting the button entitled "Generate Password"). In various embodiments, the password may expire a predetermined amount of time after it is generated such as, for example, after twenty-four hours. At step 208B, the password may be communicated to the client 124. Screen 602, as shown in Figure 6B, illustrates an exemplary communication to the client 124 in which is included a password. The communication may also be sent to the client 124 by fax, phone or via another method. At step 208C, the registration/authentication system 102 may prompt the client 124 to enter the password into the client access device 112, for example. In various embodiments, the client 124 may be prompted to enter the password by a medium different than the medium through which the password was communicated to the client 124. The client 124 may be authenticated by comparing the password received, e.g., via the client access device 112, to the password originally communicated to the client 124.

Even when a third party certification authority 122 is used to issue the digital certificate, the system 102 generally verifies the client's identity. However, in other embodiments, a third party (e.g., the certification authority) may perform the client identification described above.

Referring again to Figure 2, at step 210, the authorization/registration system 102 may issue a digital certificate 232 for the client 124. The digital certificate 232 may be issued to comply with various specifications such as the X.509 standard for digital certificates, which is required for use with various secure communication protocols such as SSL or TLF. To issue the digital certificate 232, the registration/authentication system 102 may request that the client access device 112 (or other device on which the digital certificate 232 is stored) create an encryption key pair and forward the public key to the registration/authentication system 102. The registration/authentication system 102 may create a digital certificate 232 including the public key and other information.

The digital certificate itself may contain, for example, a client public key, a creation date, an expiration date, client information such as name, address, contact information, client email address (userid), etc. Additionally, the certificate 232 may contain a unique random string. The string may be included in the name fields (thus making the Distinguished Name unique) to provide each certificate with a unique identifier. This may allow multiple certificates to be issued to the same client 124, for example, for storage on multiple client access devices 112. In various embodiments, the digital certificate 232 may also contain information related to the initial binding 228 of the certificate.

In various embodiments, the registration/authentication system 102 may use "ActiveX" software, for example, or an equivalent software package to facilitate creation of the digital certificate 232. The system 102 may prompt the client 124 through the client access device 112 or other device to download "ActiveX" or a similarly suitable software package. The download may not be necessary if the client access device 112 uses an operating system with "ActiveX" or a similarly suitable built-in software package such as, for example, Microsoft Windows NT®, Windows 2000® or Windows XP®. Also, the download may not be necessary if the client 124 is using a web-browser or other application that already has "ActiveX" built-in. "ActiveX" or a similarly suitable software package may cause the client access device 112 to create an encryption key pair, and request that the system 102 sign the digital certificate 232. Communications performed by the client access device 112 may be according to the PKIX including specifications such as PKCS7 protocol, for example.

The system 102 may sign the digital certificate according to a variety of methods. For example, the system 102 may sign the digital certificate by performing a mathematical operation on the digital certificate file. The signature may be verified later by performing an inverse mathematical operation on a purported digital certificate file, and/or looking for a known mathematical relationship in the file. Attempts to tamper with the contents of the digital certificate 232 may destroy the mathematical relationships, thus spoiling the signature.

After signing the certificate, the system 102 may send the signed digital certificate 232 to the client 124 and/or the client access device 112. The client access device 112 may prompt the client 124 to accept or decline the digital certificate 232. If the client 124 accepts the digital certificate 232, it may be stored in a certificate store 126 of the client access device 112. The client access device 112 may report to the system 102 that the digital certificate 232 has been successfully stored.

In various embodiments, the digital certificate 232 may be sent to the client 124 along with a cookie file 125. The cookie file 125 may be stored at a storage location 126 of a client access device 112 used by the client, for example, at a cookie location associated with a web-browser of a client access device 112. The cookie file 125 may include an identification of the digital certificate, for example, a hash of the certificate. The cookie file 125 may be used to verify that the certificate has not been copied, for example, as discussed in more detail below.

As discussed above, in other embodiments, the system 102 may rely on a third party certification authority 122 to issue the digital certificate 232. The third party certification authority 122 may prepare the digital certificate 232 at step 210 as described above. The third party certification authority 122 may sign a digital certificate by performing a mathematical operation on the digital certificate using, for example, the third party certification authority's private key. The system 102 may verify the digital signature by performing a similar mathematical operation on the digital certificate 232 using the third party certification authority's public key. If a known mathematical relationship is found, then the digital certificate 232 may be authenticated.

At step 212, the registration/authentication system 102 may bind the digital certificate 232 to the client. In various aspects, the registration/authentication system 102 may create a binding 228 between the digital certificate 232 and the client 124 by adding information regarding the digital certificate 232 to the client's entry in the database 120. The information added to the client's entry may include a representation 226 of the digital certificate 232 and an expiration date of the binding 228. In various embodiments, the representation may be a hash of the digital certificate 232 (also, see above). The expiration date of the binding 228 may be the time at which the binding 228 will no longer be valid, and may depend on the type of business services that the client 124 accesses through the firm. For example, a client 124 who trades equities with the firm may have an expiration date 180 days from binding, while a prime brokerage client 124 may have an expiration date 90 days from binding. It will be appreciated that any expiration date may be chosen for the binding 228. In various embodiments, the client 124 may select the expiration date for the binding 228 of the client's digital certificate or certificates. Also the registration/authentication system 102 may select an expiration date based on the security risk posed by the client 124, for example, and/or the sensitivity of the services provided to the client 124. In certain aspects, the binding 228 may be configured to expire before the expiration date of the digital certificate 232.

At step 214, the system 102 may receive from the client 124 a password that was, e.g., selected by the client. The password may be configured for use by the client 124, along with the digital certificate 232, to log into the client services system 102 via the registration/authentication system 102. The password may be a complex password subject to certain restrictions (e.g., enforced by system 102). For example, the complex password may have a minimum length and may be required to contain a combination of one or more different kinds of characters such as, for example, lower case letters, upper case letters, numerals, and/or symbols. A representation of the complex password (e.g., a hash of the password) may be stored in the client's entry in database 120.

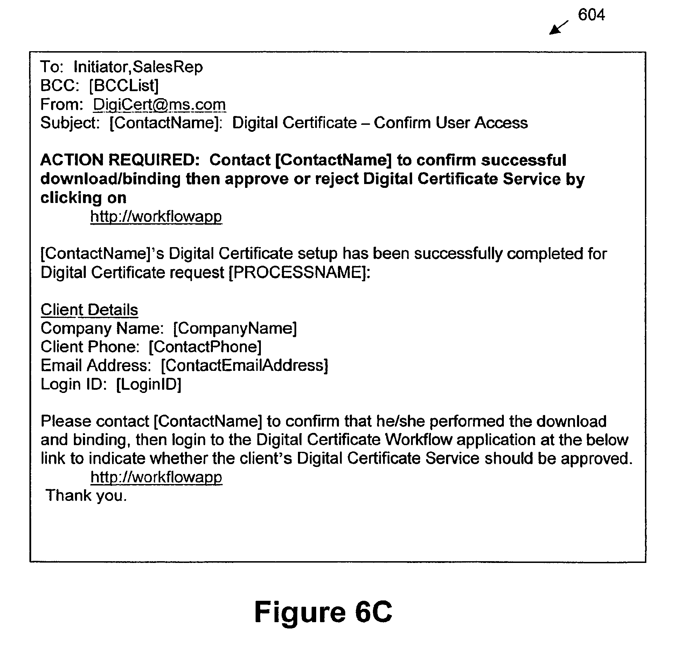

According to various embodiments, the system 102 may verify that a digital certificate 232 has been issued successfully. The system 102 may prompt an administrative user to contact the client 124 by telephone, for example, to inquire whether the client 124 is able to log into the client service system 110 using the digital certificate 232. Screen 604, as shown in Figure 6C, is an exemplary communication to an administrative user prompting contact with the client 124 to verify that an issued digital certificate 232 operates correctly. The registration/authentication system 102 may automatically check the status of the client's digital certificate 232 by requesting the digital certificate 232 from the client 124 and verifying its validity and its binding 228 to the client representation 230.

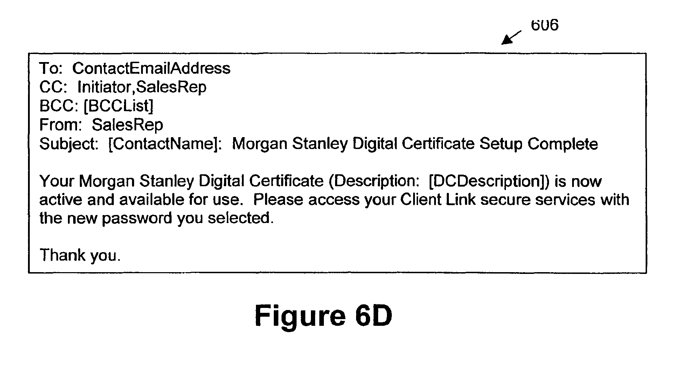

At step 216, the system 102 may notify the client 124 that the digital certificate 232 has been successfully issued. Screen 606, as shown in Figure 6D is an exemplary communication that may be sent to notify the client 124 of issuance of the digital certificate 232. The communication may be sent to the client 124 via various methods including e-mail, telephone, or other channels.

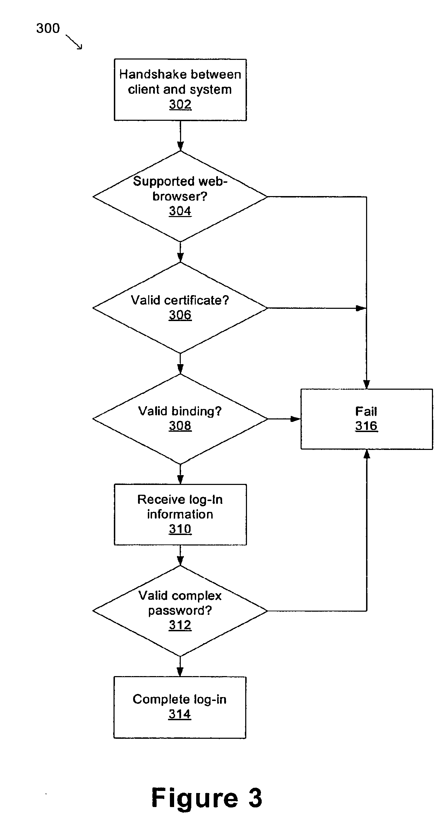

Figure 3 is a flowchart depicting various aspects of a process flow 300 involving the registration/authentication system 102 of the present invention. The system 102 may be configured to authenticate the client 124 prior to allowing access to business services offered by a firm through the client service system 110. In certain embodiments, the system 102 may authenticate clients 124 who have been previously issued digital certificates 232. The process flow 300 illustrates the interaction between the client 124 and the system 102 during a session with the client service system 110.

At step 302, the system 102 may take part in a preliminary exchange of information, or handshake, with the client access device 112 requesting authentication. The handshake may be performed in accordance with the Secure Socket Layer (SSL) protocol, for example, or other suitable protocol. Information exchanged between the client access device 112 or other device and the system 102 may include an operating system type and version for each party, the type of digital certificate 232 store used by the client access device 112, the party's public keys, or other information.

At step 304, the system 102 may determine whether the client access device 112 requesting authentication is running a supported web-browser. The system 102 may support web-browsers utilizing a central certificate store operatively associated with an operating system of the client access device 112. For example, client access devices 112 running a version of Microsoft's Windows® operating system including Windows NT®, Windows 2000®, or Windows XP® in conjunction with an appropriate version of Microsoft's Internet Explorer® may utilize a single central certificate store. Also, the system 102 may support other web-browsers using separate certificate stores including, for example, those from Netscape, Mozilla, or others. If the client access device 112 is not running a supported web-browser, the system 102 may fail the client's log-in attempt at step 316. In certain embodiments, rather than failing the client's log-in attempt, the system 102 may redirect the client 124 to another log-in method such as a method using the security token 118, for example.

It will be appreciated that according to various embodiments, the system 102 may support non web-based log-ins. For example, the client access device 112 may access the system 102 without using a web-browser program. Such access may be accomplished using an SSL or other wrapper program such as the open source "Stunnel" program, for example. "Stunnel" or similar programs may be used to encrypt communications in SSL or another security protocol outside of a web-browser setting. By using an SSL wrapper program, an application may access the client service system 110 through the registration/authentication system 102 according to SSL protocol even if the application does not contain internal support for SSL. Also, in various embodiments, the registration/authentication system 102 may support access through other application types including, for example, "Citrix" and Virtual Private Networking (VPN).

At step 306, the system 102 may determine whether the client access device 112 is in possession of a valid digital certificate 232. The registration/authentication system 102 may check the digital certificate 232 to determine whether it bears a valid and trusted digital signature including whether the digital certificate 232 has expired. The digital signature may be that of a trusted third party certification authority 122, or of the registration/authentication system 102 itself, as described above. In various aspects, registration/authentication system 102 may be configured to consider only digital certificates 232 issued by the registration/authentication system 102. Prior to checking a client access device's digital certificates 232, the system 102 may issue a certificate request. The certificate request may include a list of all of the certificates that the system 102 is willing to accept to permit access.

Also, in one aspect, the registration/authentication system 102 may check for the presence of a cookie file 125 corresponding to the digital certificate stored, for example, in a storage location 126 of the client access device 112 requesting authentication. This may allow the registration/authentication system 102 to verify that the digital certificate was issued to the client access device 112 requesting authentication, and not copied from another client access device 112. If the client access device 112 requesting authentication is not able to produce a correct cookie file 125, then the registration/authentication system 102 may set and investigate an alert. An investigation into an alert may involve determining whether the alert was caused because the digital certificate 232 is compromised or because of another kind of failure, such as a technical failure. A digital certificate 232 that is deemed compromised may not be honored by the registration/authentication system 102.

In various embodiments, an administrative user may know, or have reason to suspect that a client 124's digital certificate 232 has been compromised. The administrative user may be able to manually deem a digital certificate 232 compromised, for example, by affecting an entry in the client database 120 through an administrative access device 116. For example, the administrative user may set a flag at the client's entry in the client database 120, or may delete the binding between the client and a digital certificate 232. In some embodiments, manually deeming a digital certificate 232 compromised may also include removing the certificate 232 from us and/or revoking the digital certificate 232 either temporarily or permanently. Also, the administrative user may remove a particular client's 124 entitlement to digital certificate 232 service, for example, if the particular client 124 repeatedly allows its digital certificates 232 to be compromised.

The validity of a digital certificate 232 may be checked in other ways. For example, the system 102 may determine whether the digital certificate 232 has expired based on the expiration date incorporated into the digital certificate 232. Also, the system 102 may determine whether the digital certificate 232 has been revoked by checking one or more X.509 servers. X.509 servers may contain listings of digital certificates 232 that have been revoked. In various embodiments, determining whether a digital certificate 232 has been revoked may be in addition to checking the digital certificate's binding 228 as discussed below.

At step 308, the system 102 may determine whether the digital certificate 232 is bound to the client 124 by a valid binding 228. The digital certificate 232 may be bound to the client 124 as discussed above. The system 102 may check the binding 228 of the digital certificate 232 by locating the client's entry in the database 120. The client's entry in the database 120 can be checked to determine whether the binding 228 to the digital certificate 232 exists and has not yet expired. If no reference to the digital certificate 232 is found in the client's entry in the database 120, or if the binding has expired, then the digital certificate 232 may be deemed not validly bound to the client 124, and the system 102 may decline the client's log-in request at step 316. In various embodiments, the system 102 may determine whether the digital certificate 232 is validly bound to the client 124 in lieu of or in addition to determining whether the digital certificate 232 has been revoked. In one embodiment, the binding is checked by system 102, by (1) deriving from the client's certificate, the representation of the digital certificate (e.g., a hash of the digital certificate) and the userid (e.g., the client's email address) and then checking that these items have matching entries for a client in database 120, and (2) checking the binding expiration date in the database entry to ensure that the binding has not expired.

According to various embodiments, the registration/authentication system 102 may use the digital certificate 232 as part of a two-factor authentication system. A two-factor authentication system authenticates the client 124 by requiring the client 124 to demonstrate something the client 124 knows as well as something that the client 124 has. A first factor (e.g., something that the client 124 has) may be the digital certificate 232. A second factor (e.g., something that the client 124 knows) may be, for example a complex password described with respect to step 214 of Fig. 2. At step 310, the registration/authentication system 102 may receive additional log-in information from the client 124 including a complex password, for example. At step 312, the registration/authentication system 102 may determine if the password entered by the client 124 is correct by comparing to information in the client's entry in database 120. For example, a hash of the password transmitted at step 310 may be computed and compared to a hash of the client's password stored in the database 120. If the password is incorrect, the system 102 may decline the client's 124 request to log-in at step 316. If the password is correct, the system 102 may log the client 124 into the system at step 314.

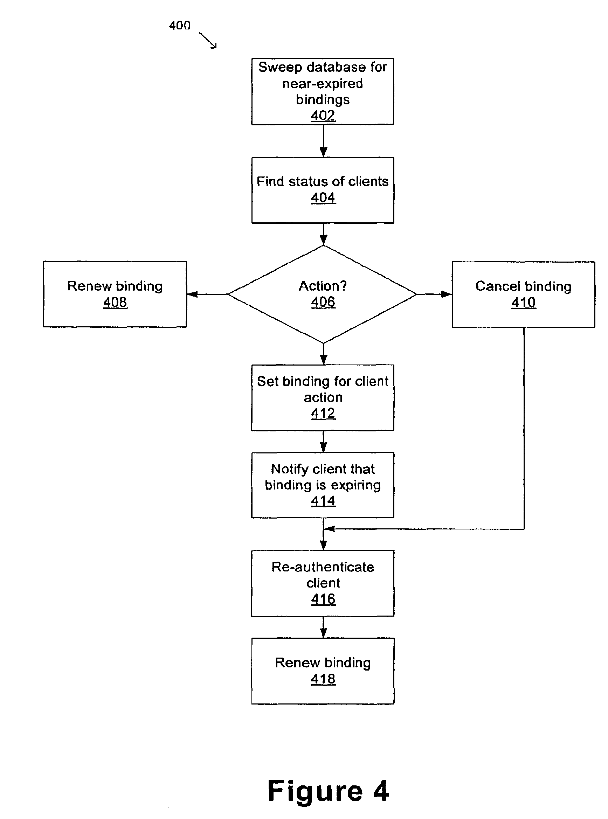

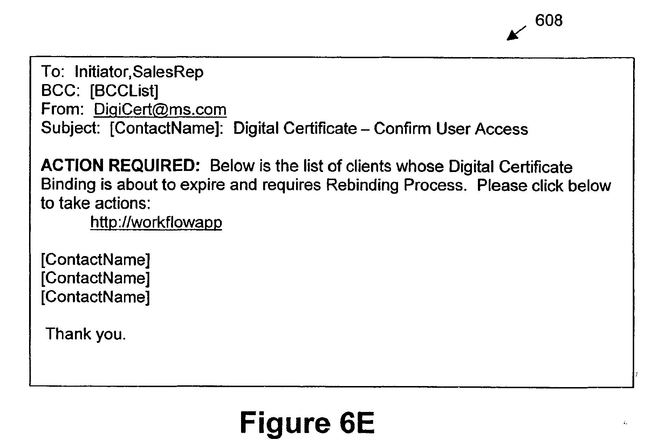

Figure 4 is a flowchart depicting various aspects of a process flow 400 involving the rebinding of bindings 228 that are near expiration. At step 402, the system 102 may sweep the client database 120 on a periodic (e.g., daily) or non-periodic basis for bindings 228 that are near expiration. In the context of the present application, the term "near" may be defined in accordance with the security needs, for example, of a firm that offers business services. According to various embodiments, the system 102 may notify an administrative user of bindings that are near expiration. The administrative user may be a sales representative, for example, with responsibility for the client 124 whose binding 228 is near expiration. Screen 608, as shown in Figure 6E, is an exemplary communication that can be sent to inform an administrative user that the bindings 228 of one or more clients 124 are about to expire. The communication 608 may also provide the administrative user with instructions for rebinding the client's digital certificate or certificates.

At step 404, the system 102 may find the status of clients 124 whose bindings 228 are about to expire. According to various embodiments, an administrative user or sales representative may contact clients 124 whose bindings 228 are near expiration by telephone or e-mail, for example. Contacting clients 124 may allow the administrative user to verify that the client 124 is still actively using the firm's business services, that the client 124 still wants to use a digital certificate 232 to access the client service system 110, and/or that the client 124 is still using the client access device 112, smart card (not shown) or other device containing the digital certificate 232. Also, the system 102 may automatically find a client's status by referring to records of when and how often the client 124 has logged into the client service system 110 using the registration/authentication system 102.

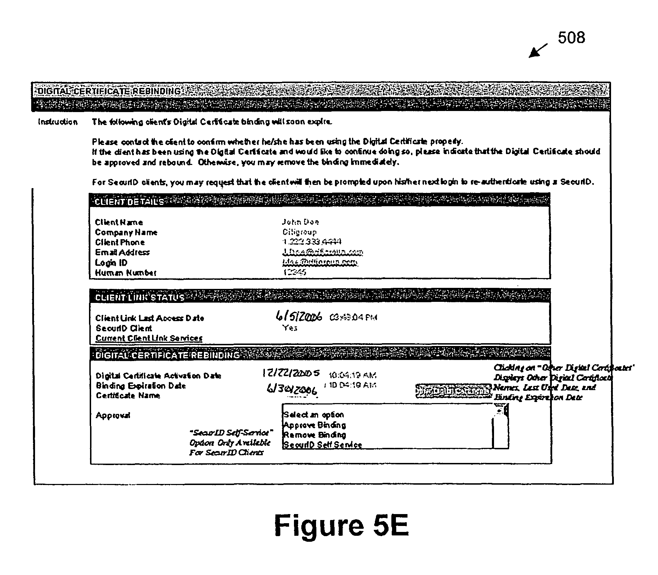

At step 406, the system 102 may process bindings 228 that are near expiration. In various embodiments, near-expired bindings 228 may be renewed at step 408, cancelled at step 410, or set for client action at step 412. An administrative user may decide which action to take based on the status of the client 124 found at step 404. In UI screen 508, as shown in Figure 5E, an administrative user may approve a binding 228, remove a binding 228, or set the binding 228 for a "SecurID Self Service" feature. Setting the binding 228 for "SecurID Self Service" may involve setting the binding 228 for client action.

In various embodiments, the system 102 may determine the disposition of some or all near-expired bindings 228 without input from an administrative user. For example, the system 102 may renew or cancel the bindings 228 of clients 124 based on how frequently the clients 124 access the client service system 110. The system 102 may refer some bindings, such as those that are close to a threshold, for example, to an administrative user.

If system 102 determines that the client's binding 228 should be renewed, or receives an instruction to renew from an administrative user, it may renew the client's binding 228 at step 408. Renewing the binding 228 may involve changing the binding's expiration date to a time in the future. Any expiration date may be chosen, as discussed above. If the system 102 determines that a client's binding 228 should not be renewed, or receives an instruction not to renew from an administrative user, it may cancel a client's binding 228 at step 410. According to various embodiments, the binding 228 may be cancelled immediately, or allowed to lapse at its current expiration date. If a client 124 did not intend for the binding 228 to be cancelled, the client 124 may contact a sales representative who may rebind the client's digital certificate 232 and/or issue the client 124 a new digital certificate 232 as described above.

If the system 102 determines that a client's binding 228 should be set for client action, or receives an instruction to do so from an administrative user, it may set the client's binding 228 for client action at step 412. Steps 414 - 418 describe how the system 102 processes the binding 228 set for client action. The client's binding 228 may be set for client action if the client's level of activity with the client service system 110 through the registration system 102 is not high enough to merit an automatic renewal, but not low enough to warrant an automatic cancellation. Also, setting the binding 228 for client action can provide extra security by requiring the client 124 to periodically re-verify the client's 124 identity. It will be appreciated that the binding 228 may be set for client action before it is near expiration, for example, to provide extra security. In various embodiments, the binding 228 may be preset for client action at various intervals during its pendency.

At step 414, the system 102 may transmit a communication to the client 124 notifying the client 124 that his or her binding 228 is nearing expiration. The communication may also include instructions directing the client 124 to re-authenticate prior to expiration of the binding 228. If the client 124 intends to re-authenticate using the security token 118, for example, the communication may request that the client 124 log in to the client access device 112 containing the digital certificate 232 using the client's token 118 prior to expiration of the binding 228. At step 416, the system 102 may re-authenticate the client 124. According to various embodiments, the client 124 may be re-authenticated using the security token 118 as described above. The client 124 may also be authenticated using any of the other methods described above. Additionally, the client 124 may be re-authenticated by contacting a sales representative with responsibility for the client 124.

When the client 124 has been re-authenticated, the system 102 may renew the client's binding 228 at step 418. The binding 228 may be renewed for any length of time as described above.

It can be seen that the registration/authentication system 102 of the present invention may be implemented by a firm to authenticate clients 124 who attempt to access business services of the firm locally or remotely. The burden of the authentication process on a client 124 may be minimized because, in many instances, the client 124 only needs to provide a password and a digital certificate 232 at log-in. The digital certificate 232 may be provided automatically by the client access device 112. The registration/authentication system 102 verifies the client's identity (e.g., by using the security token 118), only when a new digital certificate 232 and binding 228 are issued, or potentially when a binding 228 is renewed. Also, by keeping the binding 228 internal to the system 102, a firm may keep its own internal record of which digital certificates 232 it will honor. This may obviate the need to search an external server, such as an X.509 server, to determine whether a digital certificate 232 has been revoked.

It is to be understood that the figures and descriptions of embodiments of the present invention have been simplified to illustrate elements that are relevant for a clear understanding of the present invention, while eliminating, for purposes of clarity, other elements. Those of ordinary skill in the art will recognize, however, that these and other elements may be desirable for practice of various aspects of the present embodiments. However, because such elements are well known in the art, and because they do not facilitate a better understanding of the present invention, a discussion of such elements is not provided herein.

The term "computer-readable medium" is defined herein as understood by those skilled in the art. It can be appreciated, for example, that method steps described herein may be performed, in certain embodiments, using instructions stored on a computer-readable medium or media that direct a computer system to perform the method steps. A computer-readable medium can include, for example and without limitation, memory devices such as diskettes, compact discs of both read-only and writeable varieties, digital versatile discs (DVD), optical disk drives, and hard disk drives. A computer-readable medium can also include memory storage that can be physical, virtual, permanent, temporary, semi-permanent and/or semi-temporary. A computer-readable medium can further include one or more data signals transmitted on one or more carrier waves.

As used herein, a "computer" or "computer system" may be, for example and without limitation, either alone or in combination, a personal computer (PC), server-based computer, server, main frame, microcomputer, minicomputer, laptop, personal data assistant (PDA), cellular phone, pager, processor, including wireless and/or wireline varieties thereof, and/or any other computerized device capable of configuration for processing data for either standalone application or over a networked medium or media. Computers and computer systems disclosed herein can include memory for storing certain software applications used in obtaining, processing, storing and/or communicating data. It can be appreciated that such memory can be internal or external, remote or local, with respect to its operatively associated computer or computer system. The memory can also include any means for storing software, including a hard disk, an optical disk, floppy disk, ROM (read only memory), RAM (random access memory), PROM (programmable ROM), EEPROM (extended erasable PROM), and other suitable computer-readable media.

It can be appreciated that, in various embodiments disclosed herein, a single component/element/entity can be replaced by multiple components/elements/entities and multiple components/elements/entities can be replaced by a single component/element/entity, to perform a given function or functions. Except where such substitution would not be operative to practice aspects of the present embodiments, such substitution is considered to be within the scope of the present invention.

Examples presented herein, including operational examples, are intended to illustrate potential implementations of the present invention. It can be appreciated that such examples are intended primarily for purposes of illustration. No particular aspect or aspects of the example embodiments described herein are intended to limit the scope of the present invention.

It should be appreciated that figures presented herein are intended for illustrative purposes and are not intended as construction drawings. Omitted details and modifications or altemative embodiments are within the purview of persons of ordinary skill in the art. Furthermore, whereas particular embodiments of the invention have been described herein for the purpose of illustrating the invention and not for the purpose of limiting the same, it will be appreciated by those of ordinary skill in the art that numerous variations of the details, materials and arrangement of parts/elements/steps/functions may be made within the principle and scope of the invention without departing from the invention as described in the claims.

## Claims

1. A system for authenticating a client for access to a business service of a firm, the system comprising:
a computer-implemented system configured to:
verify the identity of the client and thereafter create a binding between a digital certificate and the client, wherein the binding is configured to expire after a period of time; and
verify the validity of the digital certificate and the binding.

2. The system of claim 1, wherein the computer-implemented system is further configured to issue the digital certificate to the client.

3. The system of claim 2, wherein the system is configured to issue the digital certificate to the client after verifying the identity of the client.

4. The system of claim 3, wherein the system is configured to issue a cookie file to the client along with the digital certificate, wherein the cookie file is associated with the digital certificate.

5. The system of claim 1, wherein the system is configured to verify the identity of the client by checking a token presented by the client.

6. The system of claim 5, wherein the token is a physical token that generates passwords according to an algorithm.

7. The system of claim 5, wherein the token is a password securely transmitted to the client.

8. The system of claim 7, wherein the password expires after a predetermined amount of time.

9. The system of claim 1, wherein the binding includes a representation of the digital certificate associated with a representation of the client.

10. The system of claim 9, the computer-implemented system being further configured to verify the binding by comparing data derived from the digital certificate to the stored representation of the digital certificate and by checking a stored expiration date associated with the binding.

11. The system of claim 1, the computer implemented system being further configured to verify the binding by verifying the presence of a cookie file corresponding to the digital certificate.

12. The system of claim 1, the computer implemented system being further configured to verify the binding by checking the status of a flag, wherein a state of the flag indicates whether the digital certificate is believed to be compromised.

13. The system of claim 1, configured to deny access to the client if the binding is not verified.

14. The system of claim 1, configured to permit access to the client upon verification of the binding without re-verifying the identity of the client by a client token.

15. The system of claim 1, configured to rebind a binding upon re-verification of the identity of the client by a client token by resetting an expiration date of the binding.

16. The system of claim 1, further configured to process expiration information of the binding before expiration of the binding.

17. The system of claim 1, further configured to create at least a second binding between the digital certificate and the client, wherein the second binding is configured to expire after the first binding.

18. The system of claim 1, wherein the period of time of expiration of the binding is in the range of about 30 to 365 days.

19. The system of claim 1, wherein the period of time of expiration of the binding is in the range of about 90 to 180 days.

20. A method of authenticating a client for access to a business service of a firm, the method comprising:
verifying the identity of the client;
creating a first binding between a digital certificate and the client, wherein the binding comprises a representation of the digital certificate associated with a representation of the client, wherein the first binding expires after a period of time, and wherein the digital certificate is stored at a first location;
checking the validity of the digital certificate; and
checking whether the digital certificate is validly bound to the client.

21. A computer readable medium containing instructions that when executed by a processor cause the processor to perform a method of authenticating a client for access to a business service of a firm, the method comprising the steps of:
verifying the identity of the client;
creating a first binding between a digital certificate and the client, wherein the binding comprises a representation of the digital certificate associated with a representation of the client, wherein the first binding expires after a period of time, and wherein the digital certificate is stored at a first location;
checking the validity of the digital certificate; and
checking whether the digital certificate is validly bound to the client.

22. A method of creating a binding between a client's public key and the client, comprising:
verifying the identity of the client with a token;
associatively storing a representation of the public key, a representation of the client, and a representation of an expiration date for the binding; and
permitting the client to access a client service system upon verification that the public key presented by the client matches the public key associatively stored with the representation of the client, and that the expiration date for the binding has not expired, wherein the permitting occurs without requiring use of the client token for the verification.

23. The method of claim 22, wherein the representation of the public key is derived from a digital certificate.

24. The method of claim 22, wherein the representation of the public key is a hash of a digital certificate.

25. The method of claim 22, further comprising denying the client access to the client service system if the public key presented by the client does not match the public key associatively stored with the representation of the client.

26. The method of claim 22, further comprising denying the client access to the client service system if the expiration date for the binding has expired.

27. The method of claim 22, further comprising associatively re-storing the representation of the public key, the representation of the client, and a representation of a second expiration date for the binding, wherein the second expiration date is after the expiration date.

28. The method of claim 27, wherein the re-storing occurs after re-verifying the identity of the client with the token.

29. The method of claim 27, wherein the re-storing occurs if the client has logged-into the client service system a predetermined number of times prior to the expiration date.
